# EUROPÄISCHE PATENTSCHRIFT

(11) **EP 2 380 056 B1**
(45) Veröffentlichungstag und Bekanntmachung des Hinweises auf die Patenterteilung: **31.05.2017**
(21) Anmeldenummer: 10700208.1
(22) Anmeldetag: 07.01.2010
(51) Int. Cl.: G02B 21/34, B01L 3/00, G01N 1/28, G01N 35/00

(54) **OBJEKTTRÄGER MIT EINEM DATENSPEICHER**
OBJECT CARRIER HAVING A DATA MEMORY
PORTE-OBJET AVEC UNE MÉMOIRE DE DONNÉES

(30) Priorität: 16.01.2009 DE 102009005307
(43) Veröffentlichungstag der Anmeldung: 26.10.2011
(73) Patentinhaber: Waldemar Knittel Glasbearbeitungs GmbH, 38114 Braunschweig (DE)
(72) Erfinder: INSALATA, Fabio, 38114 Braunschweig (DE)
(74) Vertreter: Kröncke, Rolf
(86) Internationale Anmeldenummer: PCT/EP2010/000042
(87) Internationale Veröffentlichungsnummer: WO 2010/081651

(56) Entgegenhaltungen:
- EP-A1- 1 498 842
- WO-A1-2005/121865
- WO-A1-2007/072062
- JP-A- 2004 125 788
- US-A1- 2006 035 247

## Beschreibung

Die Erfindung betrifft einen Objektträger, insbesondere für die Mikroskopie oder Analysentechnik, mit wenigstens einem Informationsmittel. Die Erfindung betrifft ferner ein Verfahren zur Herstellung eines derartigen Objektträgers.

Ein gattungsgemäßer Objektträger ist beispielsweise aus der WO 2007/072062 A1 bekannt. Die DE 10 2004 024 145 A1, die WO 2005/121865 A1 sowie die JP 2004/125788 A offenbaren weitere Objektträger.

Bei dem bekannten Objektträger wird auf der Oberfläche ein Datenträger angebracht. Solche Datenträger werden beispielsweise als Aufkleber auf den üblicherweise aus Glas bestehenden Objektträger aufgeklebt, beispielsweise in Form eines RFID-Elements.

Die bekannte Art, einen Objektträger mit einem Datenträger zu versehen, hat den Nachteil, dass dieser relativ leicht verloren gehen kann, beispielsweise wenn der Klebstoff des Aufklebers seine Klebkraft verliert. Zudem kommt es im Laborbetrieb vor, dass der Aufkleber beschädigt wird. In Folge dessen kann es zu Beeinträchtigungen der Funktion oder zu einem Verlust des Datenträgers kommen.

Der Erfindung liegt die Aufgabe zu Grunde, einen im Hinblick auf die Praxistauglichkeit im Laborbetrieb verbesserten Objektträger sowie ein Verfahren zu dessen Herstellung anzugeben.

Diese Aufgabe wird durch den in dem Patentanspruch 1 angegebenen Objektträger sowie das in dem Patentanspruch 10 angegebene Verfahren gelöst. Vorteilhafte Weiterbildungen der Erfindung sind in den Unteransprüchen angegeben.

Die Erfindung ermöglicht in vorteilhafter Weise, das Informationsmittel ganz oder teilweise in den Objektträger einzubetten. Hierdurch kann das Informationsmittel weniger beschädigungsanfällig an dem Objektträger angebracht werden. Die Anordnung des Informationsmittels in einer Aussparung des Objektträgers hat den weiteren Vorteil, dass eine mechanisch robustere und dauerhaftere Verbindung mit dem Objektträger erzielt werden kann, beispielsweise durch durch Vergießen mit einer Vergussmasse.

Das Informationsmittel, das vorteilhaft als elektronisches Bauelement ausgebildet ist, ist in der Aussparung des Objektträgers von vier oder fünf Seiten von dem Material des Objektträgers umschlossen. Es verbleiben somit nur ein oder zwei Seiten, in denen kein Material des Objektträgers vorhanden ist. Von diesen Seiten her ist das elektronische Bauelement mit der Vergussmasse überdeckt. Das Informationsmittel ist vollständig in der Aussparung des Objektträgers angeordnet. Dies ermöglicht das Informationsmittel ganz in den Objektträger einzubetten, so dass sich eine allseits fluchtende Oberfläche ohne Erhebungen ergibt. Dies hat den Vorteil, dass die Geometrie des Objektträgers durch das Informationsmittel nicht verändert wird. Ein Vorteil ist insbesondere, dass sich die äußeren Abmaße des Objektträgers nicht vergrößern. Hierdurch ist der erfindungsgemäße Objektträger in der Praxis besonders angenehm zu handhaben und gut stapelbar. Zudem ist das Informationsmittel besonders gut gegen Beschädigungen oder Verlust auf Grund externer Einflüsse geschützt.

Die Anordnung des Informationsmittels in einer Aussparung des Objektträgers hat den weiteren Vorteil, dass eine mechanisch robustere und dauerhaftere Verbindung mit dem Objektträger erzielt werden kann, beispielsweise durch mehrseitiges Verkleben des Informationsträgers in der Aussparung und durch Vergießen mit einer Vergussmasse.

Grundsätzlich ist es möglich, dass die Aussparung den Objektträger ganz oder teilweise durchdringt. Die Erfindung umfasst die Möglichkeit, dass die Aussparung an jeder beliebigen Stelle des Objektträgers, ggf. auch an mehreren Stellen, vorgesehen ist, beispielsweise im mittleren Bereich oder seitlich.

Gemäß der Erfindung durchdringt die Aussparung den Objektträger nur teilweise, so dass an einer Seite des Objektträgers Material verbleibt und einen Boden der Aussparung bildet. Hierdurch kann das Informationsmittel relativ einfach und schnell in der Aussparung angeordnet und befestigt werden, ohne dass es aufwendig fixiert werden müsste. Insbesondere kann das Informationsmittel beim Befestigungsvorgang nicht durch die Aussparung hindurch fallen. Vorteilhaft kann das Befestigungsmittel, z.B. Klebstoff, über den Bodenbereich verteilt werden, so dass eine relativ große Klebfläche zur Verfügung steht und eine sichere Verklebung des Informationsmittels ermöglicht wird.

Gemäß einer vorteilhaften Weiterbildung der Erfindung ist die Aussparung seitlich an dem Objektträger vorgesehen. Hierdurch kann die Aussparung mit handelsüblichen Maschinen und Verfahrensschritten, beispielsweise durch seitliches Einfräsen mit einem zylindrischen Fräser, vorgenommen werden. Besonders vorteilhaft kann die Aussparung von der Seite in den Objektträger eingefräst werden. Ein weiterer Vorteil dieser Anordnung der Aussparung besteht darin, dass das Informationsmittel außerhalb des Objektbereichs des Objektträgers, in dem ein zu untersuchendes Objekt angeordnet werden kann, vorgesehen ist, so dass sich keine Beeinträchtigung in der praktischen Handhabung des Objektträgers durch das Informationsmittel ergibt.

Gemäß einer weiteren vorteilhaften Ausgestaltung der Erfindung ist die Aussparung nach Art einer Tasche seitlich in dem Objektträger vorgesehen. Die Aussparung kann beispielsweise durch seitliches Einfräsen mit einem relativ kurzen, zylindrischen Fräser oder durch Schleifen mit einer Schleifscheibe vorgenommen werden. Ein Vorteil dabei ist, dass das Informationsmittel nach Einsetzen in den Objektträger bereits von fünf Seiten von dem Material des Objektträgers umgeben ist, wodurch das Informationsmittel besonders gut vor externen Einflüssen geschützt ist. Zudem wird hierdurch die Befestigung des Informationsmittels in dem Objektträger zusätzlich erleichtert. Für einen vollständigen Schutz des Informationsmittels vor Umwelteinflüssen ist nur noch eine Seite beispielsweise mit einer Vergussmasse zu verschließen.

Als Informationsmittel können grundsätzlich Informationsmittel beliebiger Art verwendet werden, z. B. Trägermaterialien mit einem Barcode, der eindimensional oder zweidimensional ausgestaltet sein kann. Vorteilhaft kann auch ein Hologramm oder jede andere Art von optischem Informationsmittel als Informationsträger verwendet werden. Vorteilhaft erlaubt das Informationsmittel eine eindeutige Identifikation des Objektträgers oder einer Serie von Objektträgern.

Gemäß der Erfindung wird als Informationsmittel ein elektronisches Bauelement verwendet. Dies hat den Vorteil, dass bereits beim heutigen Stand der Mikroelektronik relativ große Datenmengen auf dem Informationsmittel speicherbar sind. Zudem kann je nach Ausgestaltung des elektronischen Bauelements, z. B. mit einem Flash-Speicher, eine einzutragende Information im Betrieb des Objektträgers mehrfach geändert werden und beliebig oft ausgelesen werden

Gemäß einer vorteilhaften Weiterbildung der Erfindung ist das elektronische Bauelement zur drahtlosen Informationsübertragung ausgebildet. Im Vergleich zu optischen Informationsmitteln ergibt sich hierdurch eine geringere Anfälligkeit gegen Verschmutzung. In diesem Zusammenhang ist es vorteilhaft, ein Bauelement mit einem Transponder zu verwenden. Dies hat den Vorteil, dass auf eine eigene Energieversorgung des Informationsmittels verzichtet werden kann und ein Batteriewechsel entfällt. Zudem kann eine praktisch unbegrenzte Lebensdauer des Informationsmittels erreicht werden. Gemäß einer vorteilhaften Weiterbildung kann das elektronische Bauelement ein RFID-Element aufweisen. RFID ist eine Abkürzung für Radio Frequency Identification Device. Es handelt sich hierbei um standardisierte Bauelemente, für die bereits eine Infrastruktur in Form von Lesegeräten und Auswertegeräten existiert. Dies hat den Vorteil, dass der erfindungsgemäße Objektträger kompatibel mit bereits vorhandener Infrastruktur in Laboren ausgebildet werden kann.

Die Erfindung umfasst ferner jede Art von Herstellungsschritten zur Herstellung der Aussparung. Beispielsweise kann die Aussparung bereits bei der Herstellung des Objektträgers in diesen eingeformt werden, z.B. durch eine entsprechende Formgebung der Herstellform. Vorteilhaft kann Aussparung auch nach Herstellung des Objektträger-Rohlings durch materialabtragende Herstellverfahren erstellt werden, wobei Verfahren wie Fräsen, Lasern oder Schleifen vorteilhaft sind. Die Erfindung umfasst ferner jede Art der Befestigung des Informationsmittels in der Aussparung, beispielsweise Klemmbefestigungen oder Rastbefestigungen, sowie jede Art von Befestigungsmittel. Vorteilhaft ist eine Befestigung mittels Klebstoff in der Aussparung des Objektträgers. Vorteilhaft kann z.B. ein lichthärtender Klebstoff verwendet werden. In diesem Fall kann zu einem gewünschten Zeitpunkt die Aushärtung des Klebstoffs durchgeführt werden, z.B. durch Bestrahlung mit ultraviolettem oder anderem Licht. Bis dahin ist ein präzises Ausrichten des Informationsmittels in der Aussparung möglich.

Grundsätzlich ist es möglich, dass das Informationsmittel ohne besondere Abdeckung in der Aussparung angeordnet ist. Gemäß der Erfindung ist vorgesehen, das Informationsmittel mit einer Vergussmasse in der Aussparung abzudecken, beispielsweise mit Kunstharz. Hierdurch kann ein besonders guter Schutz des Informationsmittels vor Umwelteinflüssen gewährleistet werden. Es ist auch vorteilhaft, das Befestigungsmittel zugleich als Abdeckmittel zu verwenden, bzw. umgekehrt das Abdeckmittel als Befestigungsmittel zu verwenden. Es ist ebenfalls vorteilhaft, das Befestigungsmittel und/oder das Abdeckmittel derart aufzubringen, dass es mit den Oberflächen des Objektträgers im Wesentlichen fluchtet oder zumindest nicht darüber hinaus ragt, so dass die Geometrie des Objektträgers erhalten bleibt. Die als Abdeckmittel verwendete Vergussmasse ist vorteilhaft resistent gegen Chemikalien, die in der Laboranalyse verwendet werden. Als Vergussmasse kann vorteilhaft ein Acrylat verwendet werden, z.B. Vitralit. Gemäß der Erfindung überdeckt die Vergussmasse das gesamte elektronische Bauelement in der Aussparung.

Der erfindungsgemäße Objektträger kann aus jedem beliebigen Material hergestellt werden. Vorteilhaft ist die Verwendung eines zumindest teilweise transparenten Materials, insbesondere Glas.

Ein erfindungsgemäßes Verfahren zur Herstellung eines Objektträgers beinhaltet die Schritte gemäß Anspruch 10.

Im Falle einer Klemm- oder Rastbefestigung kann das Anbringen des Befestigungsmittels in der Aussparung auch vorteilhaft in dem Herstellschritt b) integriert sein, so dass mit dem Formen der Aussparung auch z.B. ein Vorsprung zum Einrasten des Informationsmittels hergestellt wird.

Je nach verwendetem Befestigungsmittel können die Herstellschritte c) und d) gleichzeitig oder nacheinander erfolgen. Sofern der Herstellschritt c) vor dem Schritt d) erfolgt, ist es vorteilhaft, beim Anbringen eines Informationsmittels in der Aussparung das Informationsmittel auf dem Befestigungsmittel anzuordnen. Falls der Herstellschritt d) vor dem Schritt c) erfolgt, ist es vorteilhaft, das Befestigungsmittel derart anzubringen, dass das Befestigungsmittel das Informationsmittel mit dem Objektträger verbindet, z.B. indem das Befestigungsmittel in einen Spalt zwischen der Aussparung und dem Informationsmittel eingebracht wird.

Gemäß einer vorteilhaften Weiterbildung der Erfindung erfolgt eine Reinigung des Objektträgers nach dem Schritt b). Weitere Reinigungsschritte sind ebenfalls vorteilhaft, z.B. ein Entfernen überschüssigen Klebstoffs oder überschüssiger Vergussmasse.

Gemäß einer vorteilhaften Weiterbildung der Erfindung erfolgt im Schritt e) eine Bestrahlung des Objektträgers, insbesondere mit ultraviolettem Licht.

Gemäß einer vorteilhaften Weiterbildung der Erfindung kann vor oder nach dem Schritt e) das Informationsmittel zumindest teilweise mit einem Abdeckmittel abgedeckt werden, z.B. mit Kunstharz oder einer anderen Vergussmasse.

Die Erfindung wird nachfolgend anhand von Ausführungsbeispielen unter Verwendung von Zeichnungen näher erläutert.

Es zeigen
- Figur 1: einen Objektträger in perspektivischer Ansicht und
- Figur 2: eine Ausschnittsvergrößerung des Objektträgers gemäß Figur 1 und
- Figur 3: eine Ausschnittsvergrößerung eines Objektträgers mit einer Aussparung in einer weiteren Ausführungsform.

In den Figuren werden gleiche Bezugszeichen für einander entsprechende Elemente verwendet.

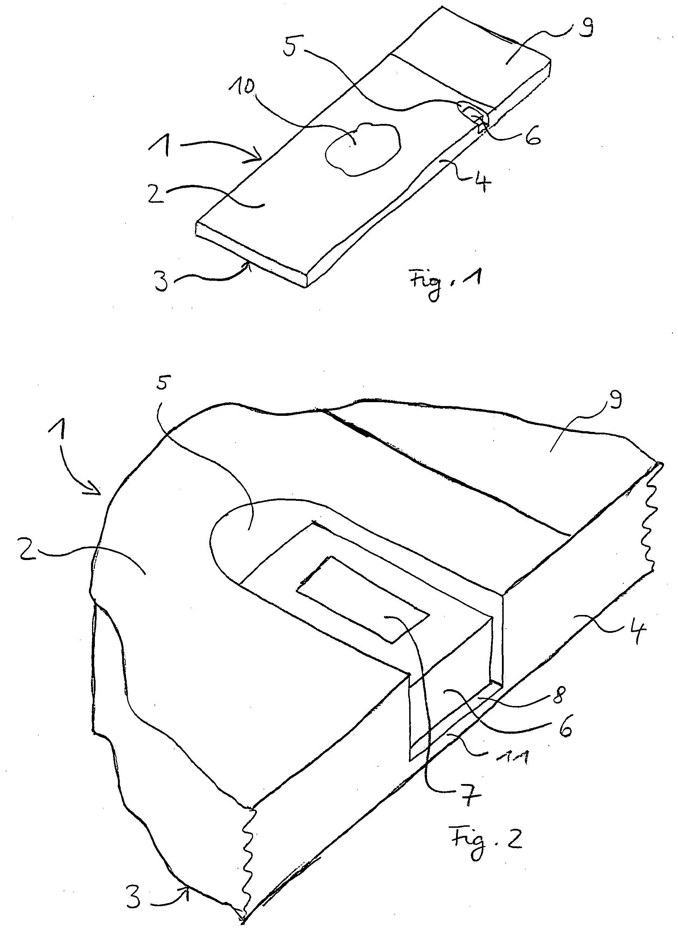

Die Figur 1 zeigt einen aus Glas hergestellten Objektträger 1, der eine gestreckte längliche Form mit im Wesentlichen quaderförmigem Umriss aufweist. Der Objektträger 1 weist eine Oberseite 2 auf, auf der ein zu untersuchendes Objekt 10 platziert werden kann. Der Objektträger 1 weist zudem eine der Oberseite 2 gegenüberliegende Unterseite 3 sowie umlaufende seitliche Begrenzungsflächen 4 auf. In einem Bereich 9 der Oberseite 2 weist der Objektträger 1 eine Beschriftungsfläche auf. Die Beschriftungsfläche des Objektträgers kann durch eine aufgedruckte Farbe oder durch eine materialabtragende Oberflächenbehandlung, z.B. durch Schleifen oder Ätzen, des Objektträgers im Bereich 9 der Beschriftungsfläche vorgesehen sein.

Der Objektträger 1 weist ferner eine seitlich angeordnete Aussparung 5 auf. Die Aussparung kann beispielsweise mittels eines zylindrischen Fräsers, der von einer seitlichen Begrenzungsflächen her in den Objektträger geführt wird, hergestellt werden. In der Aussparung 5 ist ein Informationsmittel 6 angeordnet. Das Informationsmittel 6 ist beispielsweise vollständig in der Aussparung angeordnet, so dass es nicht aus dem Objektträger hervorlugt.

Der Bereich des Objektträgers 1, in dem die Aussparung 5 vorgesehen ist, ist in der Figur 2 ausschnittsweise vergrößert dargestellt. Wie erkennbar ist, weist die Aussparung 5 eine Bodenfläche 8 auf, d. h. die Aussparung 5 durchdringt den Objektträger 1 nicht vollständig nach Art einer Bohrung, sondern in der Art einer Vertiefung, so dass ein Bereich 11 an der Unterseite 3 verbleibt und einen Boden der Aussparung 5 bildet. Das Informationsmittel 6, das beispielsweise ein RFID-Element 7 aufweist, ist mit Klebstoff auf der Bodenfläche 8 und ggf. auch an den seitlichen Flächen der Aussparung 5 befestigt. In dieser Ausführungsform ist das Informationsmittel 6 von vier Seiten in der Aussparung 5 von dem Material des Objektträgers 1 umgeben.

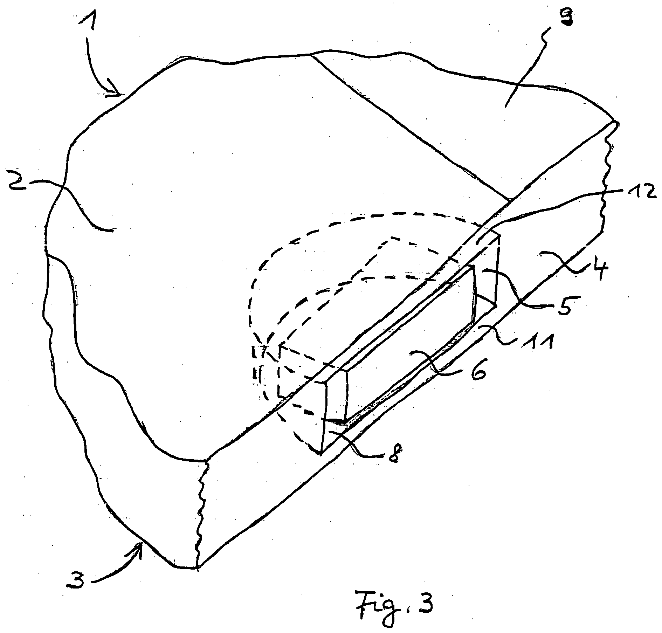

In der Figur 3 wird ein vergleichbarer Ausschnitt des Objektträgers 1 wie in der Figur 2 dargestellt, jedoch mit einer weiteren Ausführungsform der Aussparung 5. Die Aussparung 5 ist gemäß Figur 3 nach Art einer Tasche bzw. eines Hohlraums ausgebildet, die seitlich in dem Objektträger 1 vorgesehen ist. Die Aussparung 5 kann beispielsweise durch Einführen eines relativ kurzen zylindrischen Fräsers von einer seitlichen Begrenzungsfläche in das Material des Objektträgers hergestellt werden. Der Fräser ist dabei kürzer auszuwählen als die Dicke des Objektträgers, z. B. 30 % kürzer. Hierbei verbleiben Bereiche 11, 12 an der Oberseite 2 und der Unterseite 3 des Objektträgers. Die Bereiche 11, 12 haben vorteilhaft eine Dicke von wenigstens 20 µm.

In der Aussparung 5 ist wiederum das Informationsmittel 6 angeordnet. In der Ausführungsform gemäß Figur 3 ist das Informationsmittel 6 von fünf Seiten in der Aussparung 5 von dem Material des Objektträgers 1 umgeben.

## Patentansprüche

1. Objektträger (1), für die Mikroskopie oder Analysentechnik, mit wenigstens einem elektronischen Bauelement (6) mit einem Speicher zur Datenspeicherung, wobei in dem Objektträger (1) eine Aussparung (5) vorgesehen ist, in der das elektronische Bauelement (6) angeordnet ist, wobei die Aussparung (5) den Objektträger (1) nur teilweise durchdringt, **dadurch gekennzeichnet dass** das elektronische Bauelement mit einer Vergussmasse in der Aussparung (5) abgedeckt ist, indem das in der Aussparung (5) angeordnete elektronische Bauelement (6) durch Vergießen mit der Vergussmasse derart abgedeckt ist, dass die Vergussmasse das gesamte elektronische Bauelement (6) überdeckt und die Vergussmasse mit den Oberflächen des Objektträgers (1) im Wesentlichen fluchtet oder zumindest nicht darüber hinaus steht.

2. Objektträger nach Anspruch 1, **dadurch gekennzeichnet, dass** das elektronische Bauelement (6) vollständig in der Aussparung (5) angeordnet ist.

3. Objektträger nach wenigstens einem der vorhergehenden Ansprüche, **dadurch gekennzeichnet, dass** die Aussparung (5) seitlich an dem Objektträger (1) vorgesehen ist.

4. Objektträger nach wenigstens einem der vorhergehenden Ansprüche, **dadurch gekennzeichnet, dass** die Aussparung (5) an einer für die Aufnahme eines zu untersuchenden Objekts (10) vorgesehenen Oberseite (2) des Objektträgers (1) vorgesehen ist.

5. Objektträger nach wenigstens einem der Ansprüche 1 bis 3, **dadurch gekennzeichnet, dass** die Aussparung (5) nach Art einer Tasche seitlich in dem Objektträger (1) vorgesehen ist.

6. Objektträger nach wenigstens einem der vorhergehenden Ansprüche, **dadurch gekennzeichnet, dass** das elektronische Bauelement zur drahtlosen Informationsübertragung ausgebildet ist, insbesondere mit einem Transponder versehen ist.

7. Objektträger nach Anspruch 6, **dadurch gekennzeichnet, dass** das elektronische Bauelement ein RFID-Element (7) aufweist.

8. Objektträger nach wenigstens einem der vorhergehenden Ansprüche, **dadurch gekennzeichnet, dass** die Aussparung (5) unter Verwendung von wenigstens einem der Verfahren Fräsen, Lasern oder Schleifen hergestellt ist.

9. Objektträger nach wenigstens einem der vorhergehenden Ansprüche, **dadurch gekennzeichnet, dass** das Informationsmittel (6) mit einem Befestigungsmittel, insbesondere Klebstoff, in der Aussparung (5) des Objektträgers (1) befestigt ist.

10. Verfahren zur Herstellung eines für die Mikroskopie oder Analysetechnik geeigneten Objektträgers mit den Schritten:
a) Herstellung eines Objektträgers (1) aus wenigstens einem Material,
b) Formen einer Aussparung (5) in dem Material des Objektträgers (1) derart, die Aussparung (5) den Objektträger (1) nur teilweise durchdringt, insbesondere durch Fräsen, Lasern und/oder Schleifen,
c) Anbringen eines Befestigungsmittels in der Aussparung (5) und/oder an einem elektronischen Bauelement (6), das einen Speicher zur Datenspeicherung aufweist,
d) Anbringen des elektronischen Bauelements (6) in der Aussparung (5),
**gekennzeichnet durch**:
e) Abdecken des elektronischen Bauelements (6) mit einer Vergussmasse, indem das in der Aussparung (5) angeordnete elektronische Bauelement (6) durch Vergießen mit der Vergussmasse derart abgedeckt wird, dass die Vergussmasse das geamte elektronische Bauelement (6) überdeckt und die Vergussmasse mit den Oberflächen des Objektträgers (1) im Wesentlichen fluchtet oder zumindest nicht darüber hinaus steht,
f) Aushärten des Befestigungsmittels und der Vergussmasse.

11. Verfahren nach Anspruch 10, **gekennzeichnet durch** einen Schritt:
b1) Reinigung des Objektträgers (1),
nach dem Schritt b).

12. Verfahren nach Anspruch 10 oder 11, **dadurch gekennzeichnet, dass** im Schritt f) eine Bestrahlung des Objektträgers (1), insbesondere mit ultraviolettem Licht, erfolgt.

## Claims

1. Object carrier (1), for microscopy or analysis technology, having at least one electronic component (6) having a memory for data storage, wherein in the object carrier (1) there is provided a cutout (5) in which the electronic component (6) is arranged, wherein the cutout (5) only partially penetrates the object carrier (1), **characterized in that** the electronic component is covered with a potting compound in the cutout (5), in such way that the electronic component (6) arranged in the cutout (5) is covered through potting with the potting compound such that the potting compound covers the whole electronic component (6) and the potting compound is generally aligned with the surfaces of the object carrier (1) or at least does hot protrude from it.

2. The object carrier as claimed in claim 1, **characterized in that** the electronic component (6) is arranged entirely in the cutout (5).

3. The object carrier as claimed in at least one of the preceding claims, **characterized in that** the cutout (5) is provided laterally on the object carrier (1).

4. The object carrier as claimed in at least one of the preceding claims, **characterized in that** the cutout (5) is provided on a top side (2) of the object carrier (1), said top side (2) being provided to hold an object (10) to be examined.

5. The object carrier as claimed in at least one of claims 1 to 3, **characterized in that** the cutout (5) is provided laterally in the object carrier (1) in the manner of a pocket.

6. The object carrier as claimed in at least one of the preceding claims, **characterized in that** the electronic component is configured for wireless transfer of information, in particular is provided with a transponder.

7. The object carrier as claimed in claim 6, **characterized in that** the electronic component has an RFID element (7).

8. The object carrier as claimed in at least one of the preceding claims, **characterized in that** the cutout (5) is produced by using at least one of the methods of milling, lasering or grinding.

9. The object carrier as claimed in at least one of the preceding claims, **characterized in that** the information means (6) is secured in the cutout (5) in the object carrier (1) by a securing means, in particular adhesive.

10. A method for producing an object carrier for microscopy or analysis technology, having the steps of:
a) producing an object carrier (1) from at least one material,
b) forming a cutout (5) in the material of the object carrier (1) such that the cutout (5) only partially penetrates the object carrier (1), in particular by milling, lasering and/or grinding,
c) placing a securing means in the cutout (5) and/or on an electronic component (6) which has a memory for data storage,
d) placing the electronic component (6) in the cutout (5),
**characterized by**:
e) covering the electronic component (6) with a potting compound, in such way that the electronic component (6) arranged in the cutout (5) is covered through potting with the potting compound such that the potting compound covers the whole electronic component (6) and the potting compound is generally aligned with the surfaces of the object carrier (1) or at least does not protrude from it.
f) curing the securing means and the potting compound.

11. The method as claimed in claim 10, **characterized by** a step of:
b1) cleaning the object carrier (1),
after step b).

12. The method as claimed in claim 10 or 11, **characterized in that** in step f) the object carrier (1) is irradiated, in particular with ultraviolet light.

## Revendications

1. Porte-objet (1) pour la microscopie ou la technique d'analyse, présentant au moins un composant électronique (6) doté d'une mémoire de données,
une découpe (5) dans laquelle le composant électronique (6) est disposé étant prévue dans le porte-objet (1),
la découpe (5) ne traversant le porte-objet que partiellement,
**caractérisé en ce que**
le composant électronique est recouvert par une pâte de coulée prévue dans la découpe (5) par le fait que le composant électronique (6) disposé dans la découpe (5) est recouvert en étant moulé dans la pâte de coulée de telle sorte que la pâte de coulée recouvre complètement le composant électronique (6) et que la pâte de coulée soit essentiellement alignée sur les surfaces du porte-objet (1) ou au moins n'en déborde pas.

2. Porte-objet selon la revendication 1, **caractérisé en ce que** le composant électronique (6) est disposé entièrement dans la découpe (5).

3. Porte-objet selon au moins l'une des revendications précédentes, **caractérisé en ce que** la découpe (5) est prévue sur le côté du porte-objet (1).

4. Porte-objet selon au moins l'une des revendications précédentes, **caractérisé en ce que** la découpe (5) est prévue sur un côté supérieur (2) du porte-objet (1) prévu pour reprendre un objet (10) à examiner.

5. Porte-objet selon au moins l'une des revendications 1 à 3, **caractérisé en ce que** la découpe (5) est prévue à la manière d'une poche latérale du porte-objet (1).

6. Porte-objet selon au moins l'une des revendications précédentes, **caractérisé en ce que** le composant électronique est configuré pour transmettre des informations sans fil et en particulier est doté d'un transpondeur.

7. Porte-objet selon la revendication 6, **caractérisé en ce que** le composant électronique présente un élément FRID (7).

8. Porte-objet selon au moins l'une des revendications précédentes, **caractérisé en ce que** la découpe (5) est réalisée en recourant à au moins l'un des procédés de fraisage, de formation au laser ou de meulage.

9. Porte-objet selon au moins l'une des revendications précédentes, **caractérisé en ce que** le moyen d'information (6) est fixé dans la découpe (5) du porte-objet (1) à l'aide d'un moyen de fixation et en particulier un adhésif.

10. Procédé de fabrication d'un porte-objet qui convient pour la microscopie ou la technique d'analyse, le procédé présentant les étapes suivantes :
a) préparation d'un porte-objet (1) en au moins un matériau,
b) formation d'une découpe (5) dans le matériau du porte-objet (1) de telle sorte que la découpe (5) ne traverse le porte-objet (1) que partiellement, en particulier par fraisage, formation au laser et/ou meulage,
c) placement d'un moyen de fixation dans la découpe (5) et/ou sur un composant électronique (6) qui présente une mémoire de données,
d) placement du composant électronique (6) dans la découpe (5),
**caractérisé par** les étapes suivantes :
e) recouvrement du composant électronique (6) par une pâte de coulée en recouvrant le composant électronique (6) disposé dans la découpe (5) par coulage d'une pâte de coulée de telle sorte que la pâte de coulée recouvre la totalité du composant électronique (6) et que la pâte de coulée soit essentiellement alignée sur les surfaces du porte-objet (1) au moins n'en déborde pas et
f) durcissement du moyen de fixation et de la pâte de coulée.

11. Procédé selon la revendication 10, **caractérisé par** une étape b1) de nettoyage du porte-objet (1) après l'étape b).

12. Procédé selon les revendications 10 ou 11, **caractérisé en ce qu'**à l'étape f), le porte-objet (1) est irradié en particulier par de la lumière ultraviolette.
